# EUROPÄISCHE PATENTSCHRIFT

(11) **EP 2 425 797 B1**
(45) Veröffentlichungstag und Bekanntmachung des Hinweises auf die Patenterteilung: **07.01.2015**
(21) Anmeldenummer: 10189051.5
(22) Anmeldetag: 27.10.2010
(51) Int. Cl.: A61C 1/08

(54) **Implantierungshilfsanordnung für das Implantieren eines Kieferimplantats**
Implant assistance assembly for implanting a jaw implant
Dispositif d'aide à l'implantation d'un implant de mâchoire

(30) Priorität: 02.09.2010 EP 10175139
(43) Veröffentlichungstag der Anmeldung: 07.03.2012
(73) Patentinhaber: Abboud, Marcus, 53721 Siegburg (DE)
(72) Erfinder: Abboud, Marcus, 53721 Siegburg (DE)
(74) Vertreter: ter Smitten, Hans

(56) Entgegenhaltungen:
- EP-A1- 2 072 018
- WO-A1-2010/097405
- FR-A1- 2 773 467

## Beschreibung

Die Erfindung bezieht sich auf eine Implantierungshilfsanordnung für das Implantieren eines Kieferimplantats in einem Patientenkiefer, wobei das implantierte Kieferimplantat zur Befestigung einer Zahnprothese an dem Patientenkiefer dient, und auf ein Verfahren zum Bohren einer Implantatbohrung.

Bei dem gesamten Prozess, der dem eigentlichen Implantieren eines Kleterimplantats vorausgeht, ist insbesondere das räumlich exakte Bohren der Implantatbohrung in den Patientenkiefer von großer Bedeutung, Zum Bohren der Implantatbohrung werden daher Schablonen verwendet, die auf den Patientenkiefer aufsetzbar sind und eine Führungsbohrung zum Bohren der Implantatbohrung in den Pattentenkiefer aufweisen. Bekannte Implantierungshifsanordnungen und Verfahren zur Herstellung einer Schablone zum Bohren einer Implantatbohrung in den Patientenkiefer sind relativ aufwändig, ungenau, fehlerträchtig und umständlich in der Handhabung.

Aus WO 2010/097405 A1 ist eine modular aufgebaute Implantierungshilfsanordnung bekannt, die einen Kleferadapter und eine separate Bohrschablone zum Bohren einer finalen Führungsbohrung in den Kieferadapter aufweist. Zum Bohren der Implantatbohrung in den Patientenkiefer wird die Bohrschablone von den Kieferadapter wieder abgenommen.

Aus EP 2072018 A1 ist eine Impiantierungshilfsanordnung bekannt, die aus einem Kieferadapter besteht, der aus einer Platte durch eine CAD-Maschine geformt und mit entsprechenden Führungsbohrungen versehen wird, um auf diese Weise schließlich als Implantierungshilfsanordnung für das Bohren einer Implantatbohrung zur Verfügung zu stehen.

Aus der nachveröffentlichten EP 2425796 A1 ist eine mehrteilige Implantierungshilfsanordnung bekannt, die einen Kieferadapter und eine separate Bohrschablone aufweist, wobei der Kieferadapter eine Zugriffsöffnung aufweist.

Aufgabe der Erfindung ist es demgegenüber, eine einfach anzuwendende Implantierungshilfsanordnung zum Bohren der Implantatbohrung in den Patientenkiefer zu schaffen.

Diese Aufgabe wird erfindungsgemäß gelöst durch eine Implantierungshilfsanordnung gemäß Anspruch 1 oder 2.

Die erfindungsgemäße Implantierungshilfsanordnung besteht mindestens aus einem Set von zwei Teilen, nämlich einem Kieferadapter und einer separaten Bohrschablone.

Der Kieferadapter weist ein radiologisch nicht-sichtbares Individualformteil auf, das an den Patientenkiefer anpassbar beziehungsweise angepasst ist. Das auf den Patientenkiefer aufgesetzte Individualformteil stellt mit dem Patientenkiefer einen Formschluss her, so dass der Kieferadapter reproduzierbar und stets in der gleichen Position und Orientierung auf dem Patientenkiefer aufliegt. Der Kieferadapter stellt eine räumlich eindeutige Referenz zu dem Patientenkiefer her. Der Kieferadapter weist bevorzugt keinen Prothesenzahn auf.

Der Kieferadapter weist einen radiologisch nicht sichtbaren Kupplungsstecker auf, der mit der Kupplungsbuchse der Bohrschablone eine räumlich reproduzierbare formschlüssige Kupplung ermöglicht. Unter einer Kupplungsbuchse sind alle Bauelemente zu verstehen, die eine räumlich eindeutige und reproduzierbare Kupplung der Bohrschablone an den Kieferadapter ermöglichen. Der Kupplungsstecker beziehungsweise die komplementäre Kupplungsbuchse können jeweils als ein einziges komplexes Bauteil ausgebildet sein, das diese Aufgabe erfüllt, können jedoch auch jeweils aus mehreren Bauteilen beziehungsweise Elementen bestehen, die zusammen die Funktion eines Kupplungssteckers beziehungsweise einer Kupplungsbuchse ausüben.

Der Kieferadapter weist einen radiologisch sichtbaren dreidimensionalen 3-D-Marker auf, der bei seiner dreidimensionalen radiologischen Erfassung eine räumlich eindeutige Orts- und Orientierungs-Bestimmung des 3-D-Markers beziehungsweise des Kieferadapters erlaubt. Der 3-D-Marker kann ein einziges komplexes Bauteil sein, das eine räumlich eindeutige Lage- und Orientierung- Bestimmung erlaubt. Es können jedoch auch mehrere einzelne 3-D-Marker-Elemente vorgesehen sein, die zusammen den 3-D-Marker bilden und beispielsweise als radiologisch sichtbare kleine Kugeln mit jeweils einem Durchmesser von 0,5 bis circa 3 mm ausgebildet sind. Wenn der Kieferadapter auf dem Patientenkiefer aufgesetzt ist, wird auf diese Weise eine eindeutige räumliche Beziehung zwischen dem Patientenkiefer und dem Kieferadapter hergestellt beziehungsweise radiologisch sichtbar gemacht, da von dem Patientenkiefer insbesondere der Kieferknochen ebenfalls radiologisch sichtbar ist.

In dieser Ausführungsform sind der 3-D-Marker beziehungsweise die Marker-Elemente unverlierbar beziehungsweise unlösbar an dem Kieferadapter vorgesehen. Alternativ ist eine separate Markerplatte vorgesehen, die den 3-D-Marker aufweist. Der Kieferadapter kann auf diese weise den 3-D-Marker nur temporär aufweisen, da die Markerplatte nach der radiologischen Erfassung des Kieferbildes einschließlich des Kieferadapters und der Markerplatte wieder von dem Individualformteil des Kieferadapters entfernt werden kann. Die Markerplatte weist den radiologisch sichtbaren dreidimensionalen 3-D-Marker auf, der bei seiner dreidimensionalen radiologischen Erfassung eine räumlich eindeutige Lage- und Orientierungs-Bestimmung des 3-D-Markers und der mit ihm starr und eindeutig verbundenen Teile erlaubt. Der 3-D-Marker kann ein einziges komplexes Bauteil sein, das eine räumlich eindeutige Lage- und Orientierungs- Bestimmung erlaubt. Es können jedoch auch mehrere einzelne 3-D-Marker-Elemente vorgesehen sein, die beispielsweise als radiologisch sichtbare kleine Kugeln mit jeweils einem Durchmesser von 0,5 bis circa 3 mm ausgebildet sind. Wenn die Markerplatte an den Kieferadapter angekuppelt und der Kieferadapter auf dem Patientenkiefer aufgesetzt ist, wird auf diese Weise eine eindeutige räumliche Beziehung zwischen dem Patientenkiefer und dem Kieferadapter hergestellt beziehungsweise radiologisch sichtbar gemacht. Auch die Markerplatte weist eine bevorzugt radiologisch nicht-sichtbare Kupplungsbuchse auf, die mit dem Kupplungsstecker des Kieferadapters räumlich eindeutig zusammenkuppelbar ist.

Die separate Bohrschablone weist eine Führungsbohrung zum Bohren der Implantatbohrung in den Patientenkiefer beziehungsweise in den Kieferknochen des Patientenkiefers auf. Die Bohrschablone weist eine Kupplungsbuchse auf, die mit dem Kupplungsstecker des Kieferadapters zu einer Kupplungsanordnung räumlich eindeutig und definiert zusammen gekoppelt wird.

Der Kieferadapter weist in dem Bereich des Patientenkiefers, in dem die Zahnprothese geplant ist, eine Zugriffsöffnung auf. Diese Zugriffsöffnung ist in jedem Fall mit der zu bohrenden Implantatbohrung ausgerichtet, und deckt sich mit dem Bereich der Bohrschablone, der die Führungsbohrung aufweist. Der Bereich der Bohrschablone, der die Führungsbohrung aufweist, verschließt die Zugriffsöffnung des Kleferadapters, wenn die Bohrschablone auf den Kieferadapter aufgesetzt ist. Durch die Kieferadapter-Zugriffsöffnung ist es möglich, die Bohrschablone direkt als Implantatbohrungs-Schablone zu verwenden. Es entfällt das Bohren einer Führungsbohrung in den Kieferadapter mit Hilfe der Bohrschablone. Durch die Zugriffsöffnung In dem Kieferadapter ist die fertige Schablone, bestehend aus dem Kieferadapter und der Bohrschablone, sehr kompakt, und weist insbesondere eine geringe Bauhöhe auf.

Besonders bevorzugt ragt die Bohrschablone insbesondere mit ihrem die Führungsbohrung aufweisenden Bereich in Form eines Absatzes in die Zugriffsöffnung der Prothesenplatte hinein, so dass die Bauhöhe der auf diese Weise hergestellten Implantatbohrungs-Schablone bei ausreichender axialer Länge der Führungsbohrung sehr gering gehalten werden kann.

Gemäß einer bevorzugten Ausführungsform der Implantierungshilfsanordnung ist eine Prothesenplatte vorgesehen, die mindestens einen radiologisch sichtbaren Prothesenzahn und eine Kupplungsbuchse aufweist, die mit dem Kupplungsstecker des Kieferadapters eindeutig orientiert zusammenkuppelbar ist. Die Prothesenplatte wird für die radiologische Erfassung eines Kieferbildes auf den Kieferadapter aufgesetzt. Der Prothesenzahn ist radiologisch sichtbar und stellt eine Planungshilfe bei der virtuellen Planung und Konstruktion der Zahnprothese dar.

Vorzugsweise kann der Kieferadapter eine standardisierte Kupplungsplatte mit dem Kupplungsstecker aufweisen, wobei die Kupplungsplatte nach der Abformung des Kieferadapters auf das Individualformtell auf dem Individualformteil befestigt wird. Auch die Bohrschablone ist bevorzugt eine standardisierte Bohrschablonenplatte, die die Kupplungsstecker korrespondierende Kupplungsbuchse aufweist. Die Eigenschaft "standardisiert" bedeutet In diesem Zusammenhang, dass die Kupplungsplatte und die Bohrschablonenplatte nur in einer einzigen und bekannten Lage und Orientierung zueinander zusammenkuppelbar sind. Da ihr räumlicher Bezug zueinander festgelegt und bekannt ist, können das Individualformteil, die Kupplungsplatte und die Bohrschablonenplatte radiologisch nicht-sichtbar ausgebildet sein. Ferner ist es hierdurch möglich, die Führungsbohrung mit Hilfe von bei der virtuellen Zahnprothesen-Planung generierten Implantatbohrungs-Lageinformationen durch eine Werkzeugmaschine an einem von dem Behandlungsort entfernten Ort, also an einem von dem Patientenkiefer und dem Kieferadapter entfernten Ort, herzustellen, und erst nach der Herstellung an den Behandlungsort zu übersenden.

Vorzugsweise ist die Zugriffsöffnung der standardisierten Kupplungsplatte ebenfalls standardisiert. Die Zugriffsöffnung ist in der standardisierten Kupplungsplatte also bereits vorgesehen, und muss nicht manuell in der Kupplungsplatte hergestellt werden. Die Kupplungsplatte kann auch mehrere standardisierte Zugriffsöffnungen aufweisen, von denen jedoch für eine Behandlung nur eine oder nur wenige benutzt wird beziehungsweise werden.

Die Zugriffsöffnungen können bevorzugt durch leicht entfernbare Zugriffsöffnungs-Deckel verschlossen sein. Nur der Deckel der für die Behandlung benötigten Zugriffsöffnung wird entfernt. Alle nicht benötigten Zugriffsöffnungen bleiben während der Behandlung durch die betreffenden Deckel verschlossen. Es können auf diese Weise auch ohne weiteres zwei benachbarte standardisierte Zugriffsöffnungen der Kupplungsplatte geöffnet werden, so dass mit einem einzigen Kieferadapter für zwei verschiedene Orte des Patientenkiefers jeweils eine Bohrschablone geplant und verwendet werden kann. Die Kupplungsplatte kann eine einzige sich über den gesamten Kieferbogen erstreckende Kieferbogen-Öffnung aufweisen, die durch mehrere seriell unmittelbar aneinander angrenzende Zugriffsöffnungs-Deckel verschlossen ist. Zum Freilegen der Zugriffsöffnung wird nur der Deckel beziehungsweise werden nur die Deckel entfernt, der beziehungsweise die die benötigte Zugriffsöffnung verschließt beziehungsweise verschließen. Die verbleibenden Deckel stellen die für die radiologische Erfassung erforderliche mechanische Stabilität der Kupplungsplatte beziehungsweise des Kieferadapters her.

Vorzugsweise weisen die Zugriffsöffnung-Deckel jeweils einen radiologisch sichtbaren Deckel-Marker auf. Diese Deckel-Marker können ebenso Elemente des 3-D-Markers der Kupplungsplatte bilden. Die Deckel-Marker haben den Zweck, in dem radiologischen Kieferbild anhand der fehlenden Deckel-Marker die entfernten Deckel, und damit die Lage und die Größe der Zugriffsöffnung erkennbar zu machen. Die Größe und Lage der Zugriffsöffnung ist unter Umständen wichtig für die Auswahl beziehungsweise die Herstellung der Bohrschablone, insbesondere dann, wenn die Bohrschablone einen Absatz aufweist, der in die Zugriffsöffnung hineinragt.

Beim Gebrauch wird zunächst das Kieferadapter-Individualformteil von dem Patientenkiefer oder einem realen Patientenkiefer-Modell abgeformt, beispielsweise mit Hilfe eines schnell aushärtenden Kunststoffes. Anschließend wird der Kupplungsstecker an das Individualformteil angebracht, beispielsweise, indem eine standardisierte Kupplungsplatte einschließlich des Kupplungssteckers mit dem Individualformteil verbunden, beispielsweise verklebt, wird. Das Individualformteil mit dem Kupplungsstecker beziehungsweise mit der Kupplungsplatte bildet den Kieferadapter. Die Kupplungsstecker hatte weist bereits eine standardisierte Zugriffsöffnung auf. Wenn beim

Abformen des Individualformteils die Zugriffsöffnung darin nicht schon freigelassen wurde, muss die Zugriffsöffnung in dem Individualformteil nach der Fixierung der Kupplungsplatte darauf manuell in das Individualformteil geschnitten werden.

Anschließend wird der Kieferadapter auf den Patientenkiefer aufgesetzt. Diese Situation wird dann radiologisch dreidimensional in Form eines entsprechenden digitalen dreidimensionalen Kieferbildes dreidimensional erfasst, wobei in dem Kieferbild im wesentlichen der Patientenkiefer, und hierbei im wesentlichen der Kieferknochen, sowie der 3-D-Marker und gegebenenfalls der Prothesenzahn der Prothesenplatte sichtbar sind. Die Qualität, Genauigkeit und Auflösung des Kleferbildes kann durch weitere bildgebende Verfahren noch verbessert werden.

Mit Hilfe des auf diese Weise gewonnenen dreidimensionalen Kieferbildes wird an einem Computer eine virtuelle Zahnprothese, das Kieferimplantat hierfür sowie die für das Kieferimplantat erforderliche Implantatbohrung geplant und festgelegt, und in Bezug auf die Implantatbohrung in Form von Implantatbohrungs-Lageinformationen gespeichert.

Anschließend werden die Implantatbohrungs-Lageinformationen an eine digital gesteuerte Werkzeugmaschine übersendet. Die Werkzeugmaschine bohrt mit Hilfe der Implantatbohrungs-Lageinformationen die Führungsbohrung in die Bohrschablone. Anschließend wird die Bohrschablone an dem Kieferadapter durch Zusammenstecken der Bohrschabfonen-Kupplungsbuchse mit dem Kieferadapter-Kupplungsstecker montiert.

Anschließend wird der Kieferadapter einschließlich der montierten Bohrschablone in den Patientenkiefer eingesetzt, und wird daraufhin die Implantatbohrung in den Patientenkiefer in Ausrichtung mit der Bohrschablonen-Führungsbohrung gebohrt. Hierbei stellt der mit der Bohrschablone, versehene Kieferadapter bereits unmittelbar die Implantatbohrungs-Schablone dar.

Als Zwischenschritt vor der Planung der Zahnprothese kann eine Prothesenplatte auf den Patientenkiefer aufgesetzt werden, wobei die Prothesenplatte einen radiologisch sichtbaren Prothesenzahn aufweist. Der in dem Kieferbild sichtbare Prothesenzahn stellt eine Planungshilfe dar, insbesondere bei der Planung der Zahnprothese.

Im Folgenden werden zwei Ausführungsbeispiele der Erfindung anhand der Zeichnungen näher erläutert.

Es zeigen:
Figur 1 ein Sagittalebenen-Schnitt eines ersten Ausführungsbeispiel einer Implantierungshilfsanordnung, die von einem Kieferadapter, einer Bohrschablone und einer Prothesenplatte gebildet wird,
Figur 2 eine Draufsicht auf den auf den Patientenkiefer aufgesetzten Kieferadapter der Implantierungshilfsanordnung der Figur 1,
Figur 3 ein Sagittalebenen-Schnitt eines zweiten Ausführungsbeispiels einer Implantierungshilfsanordnung, die von einem Kieferadapter, einer Bohrschablone, einer Markerplatte und einer Prothesenplatte gebildet wird, und
Figur 4 eine Draufsicht auf den auf den Patientenkiefer aufgesetzten Kieferadapter der Implantierungshilfsanordnung der Figur 3.

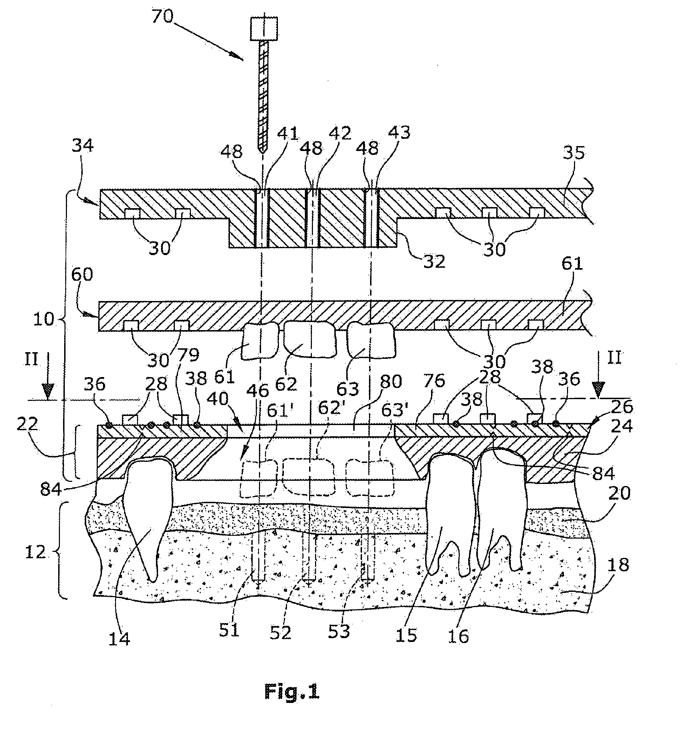

In der Figur 1 ist eine Impiantierungshiffsanordnung 10 dargestellt, die im wesentlichen von einem Kieferadapter 22 und einer separaten Bohrschablone 34 gebildet wird. Zusätzlich kann, muss jedoch nicht, die Implantierungshilfsanordnung 10 noch eine Prothesenplatte 60 aufweisen. Ferner ist in der Figur 1 ein Patientenkiefer 12 dargestellt, der einen Kieferknochen 18, Zahnfleisch 20 und nicht auszutauschende, also "gesunde" Zähne 14,15,16 aufweist. Ferner sind an dem Patientenkiefer 12 virtuelle Zahnprothesen 61' 62' 63' angedeutet.

Der Kieferadapter 22 besteht aus einem radiologisch nicht-sichtbaren Individualformteil 24 und einer hiermit verbundenen, beispielsweise verklebten, standardisierten und radiologisch nicht-sichtbaren Kupplungsplatte 26 mit mehreren Kupplungssteckern 28. Der Kieferadapter 22 wird hergestellt, indem zunächst das Individualformteil 24 von dem Patientenkiefer 12 oder einem realen Modell des Patientenkiefers 12 mit Hilfe eines schnell aushärtenden Kunststoffs abgeformt wird. Hierbei wird nach Möglichkeit bereits die Zugriffsöffnung 46 des Individualformteils vorgesehen, das heißt, es wird bei der Abformung der Bereich ausgespart, in dem die Zahnprothesen 61',62',63' beziehungsweise die Implantatbohrungen 51, 52,53 geplant sind.

Nach dem Aushärten des Kunststoffes kann das Individualformteil 24 von dem Patientenkiefer 12 beziehungsweise dem realen Modell hiervon abgenommen werden, und wird die standardisierte Kupplungsplatte 26 mit dem Individualformteil 24 verklebt.

Die Kupplungsplatte 26 weist mehrere 3-D-Marker-Elemente 36 in Form von radiologisch sichtbaren Metall-Kugeln auf, die in den Kunststoff-Kupplungsplatten-Körper eingegossen sind und die einen Durchmesser von circa 1,0 mm aufweisen. Alle Marker-Elemente zusammen bilden einen 3-D-Marker 36.

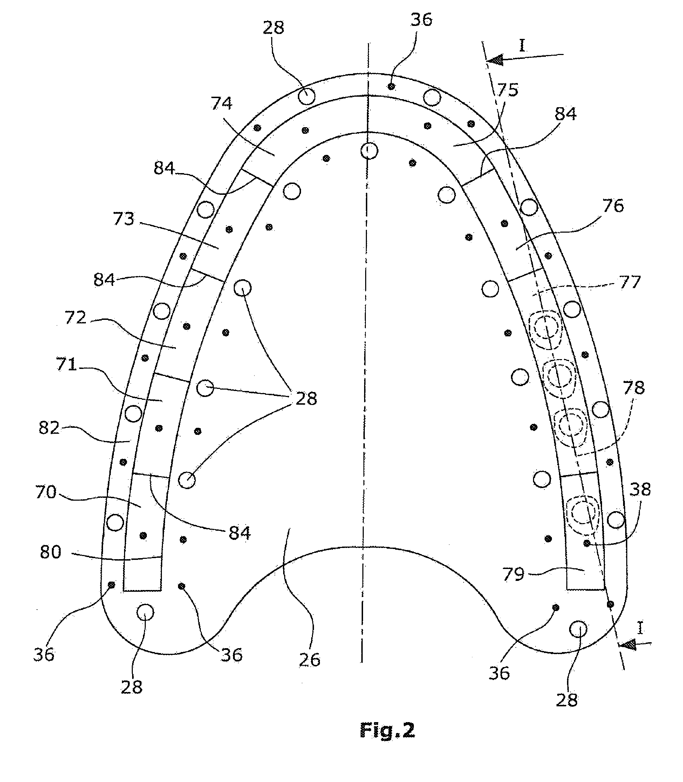

Der Kieferadapter 22 ist mit einer Zugriffsöffnung 40 in dem Bereich versehen, in dem die Zahnprothesen und daher auch die Implantatbohrungen 51,52,53 in dem Patientenkiefer 12 vorgesehen sind, siehe hierzu Figur 2. Die Zugriffsöffnung 40 kann als standardisierte, also vorgefertigte, Zugriffsöffnung in der Kupplungsplatte 26 vorgesehen sein. Um für Patientenkiefers verschiedener Größen und Formen und für verschiedene Implantatbereiche des Patientenkiefers ein passende standardisierte Kupplungsplatte einschließlich standardisierter Zugriffsöffnungen zur Verfügung stellen zu können, kann dem Zahnarzt ein ganzer Satz Kupplungsplatten verschiedener Größen und Formen, sowie mit an verschiedenen Positionen angeordneten standardisierten Zugriffsöffnungen 40 zur Verfügung gestellt werden.

Um den Umfang eines Kupplungsplatten-Satzes jedoch möglichst gering zu halten, weist jede Kupplungsplatte 26 in ihrem Kupplungsplatten-Körper 82 eine in Draufsicht ungefähr U-förmige Öffnung 80 auf, die sich über den gesamten Kieferbogen erstreckt. Die Kupplungsplatten-Öffnung 80 ist durch mehrere seriell aneinandergereihte Deckel 70-79 verschlossen, die beispielsweise über materialverdünnte Sollbruchstellen 84 oder über Kraftelemente miteinander und mit dem Kuppfungsplatten-Körper 82 verbunden sind. Die benötigte Zugriffsöffnung 40 der Kupplungsplatte 22 wird durch Entfernen des beziehungsweise der betreffenden Deckel 77 hergestellt. Jeder Deckel 70-79 weist jeweils einen radiologisch sichtbaren Deckel-Marker 38 auf.

Falls bei der Herstellung des Individualformteils 24 der Bereich der Zahnprothesen 61', 62', 63' beziehungsweise der Implantatbohrungen 51, 52,53 nicht ausgespart werden konnte, muss dieser Bereich des Individualformteils 24 manuell entfernt werden. Auch das Individualformteil 24 weist also im Bereich der Implantatbohrungen 51,52,53 eine Zugriffsöffnung 46 auf, die mit der betreffenden Zugriffsöffnung 40 der Kupplungsplatte 26 fluchtet.

Optional kann vor der radiologischen Erfassung ein Zwischenschritt vorgesehen werden, nämlich die Verwendung der Prothesenplatte 60, die an dem Prothesenplatten-Körper 66 mehrere Prothesenzähne 61,62,63 als Planungshilfe aufweist, die radiologisch sichtbar sind. Die Prothesenplatte 60 wird auf den Kieferadapter 22 aufgesetzt, und erst die Kombination aus Prothesenplatte 60 und Kieferadapter 22 wird zur radiologischen Erfassung auf den Patientenkiefer 12 aufgesetzt.

Grundsätzlich kann die Verwendung der Prothesenplatte 60 jedoch entfallen, beispielsweise und insbesondere dann, wenn die durch die Zahnprothesen zu ersetzenden Original-Zähne bei der radiologischen Erfassung des Kieferbildes noch in dem Patientenkiefer 12 sitzen. Auf die Prothesenplatte 60 kann auch dann verzichtet werden, wenn die virtuellen Zahnprothesen 61',62',63' ausschließlich mit Hilfe des Kieferbildes am Computer geplant werden, und die virtuellen Zahnprothesen 61',62',63' beispielsweise aus einer virtuellen Bibliothek bezogen werden.

Der Kieferadapter 22, der gegebenenfalls mit der Prothesenplatte 60 ergänzt ist, wird zur radiologischen Erfassung auf den Patientenkiefer 12 aufgesetzt. Anschließend wird der Patientenkiefer 12 mit dem aufgesetzten Kieferadapter 22 und gegebenenfalls der aufgesetzten Prothesenplatte 60 mit Hilfe eines DVT-Gerätes radiologisch dreidimensional erfasst. Optional können zusätzlich weitere bildgebende Verfahren verwendet werden, um das hieraus resultierende Kieferbild mit einer höheren Redundanz, Auflösung und Genauigkeit erstellen zu können. In dem auf diese Weise radiologisch erfassten dreidimensionalen Kieferbild sind von dem Kieferadapter 22 insbesondere die 3-D-Marker-Elemente 36, die Deckel-Marker 38 und gegebenenfalls die Prothesenzähne 61-63, sowie von dem Patientenkiefer 12 insbesondere der Kieferknochen 18 und die Zähne 14-16 zu erkennen.

Nach dem Erfassen des dreidimensionalen Kieferbildes werden an einem Computer in dem Kieferbild die virtuellen Zahnprothesen 61',62',63' und die dazugehörigen Kieferimplantate geplant. Die virtuellen Zahnprothesen 61',62',63' ergeben sich dabei entweder aus den in dem Kieferbild sichtbaren Prothesenzähnen 61,62,63 der Prothesenplatte 60, aus den in dem Kieferbild sichtbaren noch vorhandenen und zu ersetzenden Original-Zähnen oder aus virtuelle dreidimensionalen Zahnbildern aus einer entsprechenden Bibliothek.

Insbesondere werden bei der Planung am Computer jeweils auch die Position und Orientierung der Kieferimplantate in Bezug auf den Patientenkiefer 12 festgelegt. Hierbei werden auch die Lageinformationen der zugeordneten Implantatbohrungen 51,52,53 in dem Patientenkiefer 12 beziehungsweise in dem Kieferknochen 18 festgelegt beziehungsweise ermittelt und gespeichert. Ferner ist anhand des in dem Kieferbild fehlenden Deckel-Markers des entfernten Deckels 78 auch die Position der Zugriffsöffnung 40 bekannt.

Die Implantatbohrungs-Lageinformationen und die Position der Zugriffsöffnung 40 werden anschließend an den Ort übermittelt, an dem mit Hilfe der Implantatbohrungs-Lageinformationen entsprechende Führungsbohrungen 41,42,43 in die Bohrschablone 34 durch eine digital gesteuerte Bohrmaschine gebohrt werden. Die Bohrschablone 34 wird im wesentlichen von einem vollflächigen Kunststoff-Körper 35 gebildet, der an seiner den Kieferadapter 22 zugewandten Seite Kupplungsbuchsen 30 aufweist, mit deren Hilfe eine formschlüssige Verkopplung mit den Kupplungssteckern 28 des Kieferadapters 42 hergestellt werden kann.

Die Führungsbohrungen 41,42,43 werden derart in die Bohrschablone, 34 gebohrt, dass diese mit den geplanten Implantatbohrungen 51,52,53 fluchten, wenn die Bohrschablone 34 auf dem Kieferadapter 22 montiert und der Kieferadapter 22 auf dem Patientenkiefer 12 aufgesetzt wäre. Anschließend können, müssen jedoch nicht, zylindrische Metall-Führungshülsen 48 in die Führungsbohrungen 41,42,43 eingesetzt werden.

Dann wird die Bohrschablone 34 mit den Führungsbohrungen 41,42,43 in dem Bohrschabfonen-Körper 35 auf den Kieferadapter 22 aufgesteckt, und wird diese Anordnung auf den Patientenkiefer 12 aufgesetzt.

Dann werden mit einer Bohrmaschine 70 manuell die Implantatbohrungen 51,52,53 in Ausrichtung mit den Kieferadapter-Führungsbohrungen 41,42,43 in den Patientenkiefer 12 beziehungsweise in den Kieferknochen 18 gebohrt, und der Kieferadapter 22 schließlich von dem Patientenkiefer 12 abgenommen. Anschließend können die Kieferimplantate in die Implantatbohrungen 51,52,53 eingesetzt, beispielsweise eingeschraubt werden.

Die Bohrschablone, 34 kann insbesondere mit ihrem die Führungsbohrungen 41,42,43 aufweisenden Bereich in die Zugriffsöffnung 40 des Kieferadapters 22 in Richtung Patientenkiefer 12 mit einem Absatz 32 hineinragen, so dass die zusammengekoppelte Kombination aus dem Kieferadapter 22 und der Bohrschablone 34 sehr kompakt ist. Der Absatz 32 kann standardisiert sein, so dass er formschlüssig in die standardisierte Ausnehmung 40 der Kupplungsplatte 26 passt. Die passende Bohrschablone 34 wird derart aus einem Satz standardisierter Bohrschablonen ausgewählt, dass der standardisierte Absatz 32 mit der Zugriffsöffnung 40 korrespondiert.

In einem alternativen Ausführungsbeispiel weist die Kupplungsplatte mehrere in Größe und Lage standardisierte separate Öffnungen auf, in die entsprechenden Absätze 32 der Bohrschablone, 34 formschlüssig passen. Auf diese Weise können die Ausnehmungen 40 Kupplungsbuchsen und die Absätze 32 Kupplungsstecker bilden, die separate Kupplungsbuchsen und Kupplungsstecker entbehrlich machen.

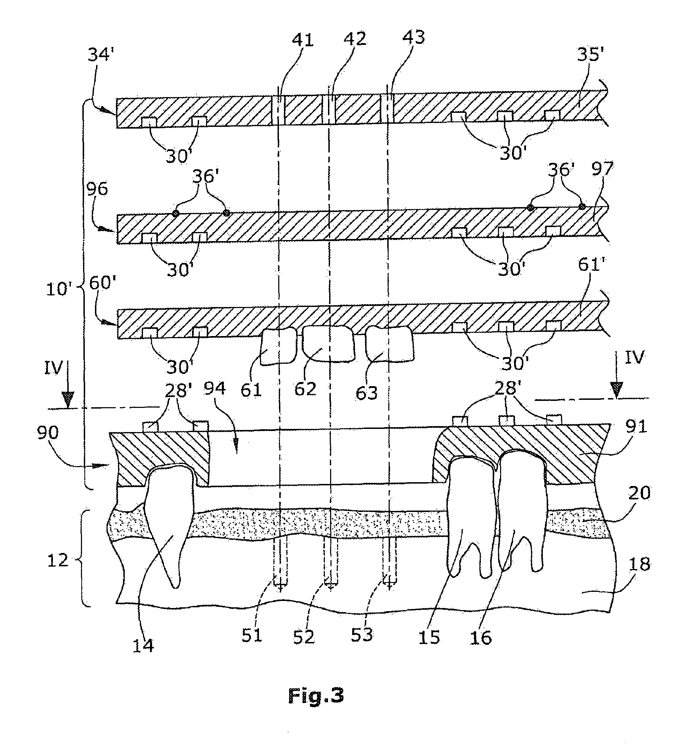

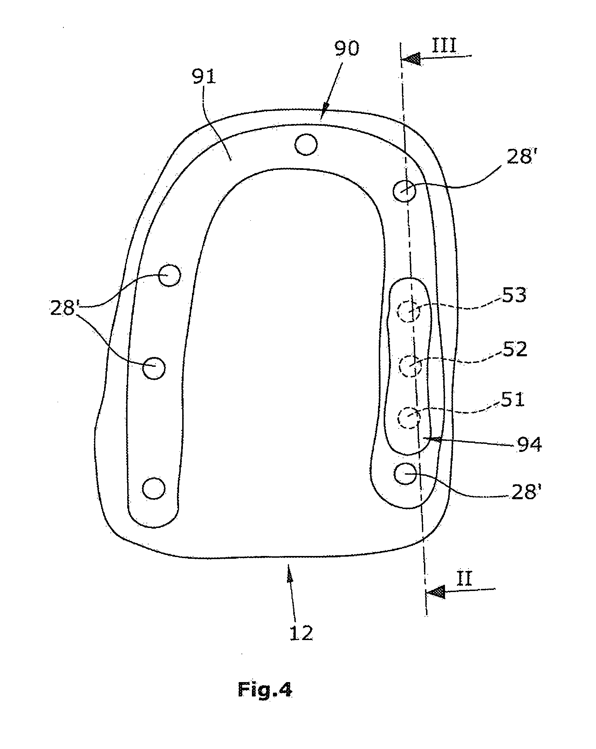

In den Figuren 3 und 4 ist ein zweites Ausführungsbeispiel einer Impfantierungshiffsanordnung 10' dargestellt, die im wesentlichen von einem gegenüber dem ersten Ausführungsbeispiel vereinfachten Kieferadapter 90, einer separaten Markerplatte 96, einer Prothesenplatte 60' und einer Bohrschablone 34' gebildet wird. Die Bezugszeichen der mit dem ersten Ausführungsbeispiel korrespondierenden Teile sind ggf. mit einem Hochstrich (') versehen.

Im Unterschied dem ersten Ausführungsbeispiel ist bei der Implantierungshilfsanordnung 10' des zweiten Ausführungsbeispiels zusätzlich die separate Markerplatte 96 vorgesehen, wobei der Kieferadapter 90 dadurch vereinfacht ist, dass die 3-D- Marker-Elemente 36' nicht unverlierbar an den Kieferadapter vorgesehen sind, sondern ausschließlich an der separaten und von dem Kieferadapter 90 entfernbaren Markerplatte 96.

Die Markerplatte 96 wird ausschließlich für die radiologische Bilderfassung auf den Kieferadapter-Körper 91 aufgesetzt, und wird nach der radiologischen Bilderfassung von dem Kieferadapter-Körper 94 wieder abgenommen. Für die eindeutige räumliche Zuordnung der Markerplatte 96 zu dem Kieferadapter 90 weist die Markerplatte 96 entsprechende Kupplungsbuchsen 30' auf, die mit den Kupplungssteckern 28' des Kieferadapters 90 korrespondieren.

Der Kieferadapter 90 weist eine Zugriffsöffnung 94 in dem Bereich auf, in dem die Zahnprothesen und die Implantatbohrungen 51,52,53 in dem Patientenkiefer 12 vorgesehen sind, siehe hierzu Figur 3. Der Kieferadapter 90 ist vorliegend als einstückiger Körper 91 dargestellt, kann jedoch auch aus einem Individualforimteil und einer standardisierten Kupplungsplatte zusammengesetzt sein, wie in dem ersten Ausführungsbeispiel dargestellt,

## Patentansprüche

1. Implantierungshilfsanordnung (10) für das Bohren einer Implantatbohrung (51,52,53) in einem Patientenkiefer (12) für ein Kieferimplantat zum Stützen einer Zahnprothese, mit:
einem Kieferadapter (22), der aufweist:
ein an den Patientenkiefer (12) anpassbares Individualformteil (24), das individuell und derart an einen Patientenkiefer (12) anpassbar ist, dass sich der Kieferadapter (22) reproduzierbar auf den Patientenkiefer (12) formschlüssig aufsetzen lässt,
einen Kupplungsstecker (28), wobei das Individualformteil (24) und der Kupplungsstecker (28) radiologisch nicht-sichtbar sind, und
einen radiologisch sichtbaren 3-D- Marker (36), der unverlierbar an dem Kieferadapter (22) vorgesehen ist und der die räumliche Beziehung zwischen dem Patientenkiefer (12) und dem Kieferada pter (22) herstellt,
wobei der Kieferadapter (22) in Ausrichtung mit der zu bohrenden Implantatbohrung (51,52,53) eine Zugriffsöffnung (40,46) aufweist,
und einer separaten Bohrschablone (34) mit
einer Führungsohrung (41,42,43) zum Bohren der Implantatbohrung (51,52,53) in den Patientenkiefer (12), und einer Kupplungsuchse (30), die mit dem Kupplungsstecker (28) zu einer Kupplungsanordnung räumlich eindeutig und definiert derart zusammenkuppelbar ist, dass die Bohrschablone mit ihrem die Führungsbohrung (41,42,43) aufweisenden Bereich die Zugriffsöffnung (40) verschließt.

2. Implantierungshilfsanordnung (10') für das Bohren einer Implantatbohrung (51,52,53) in einem Patientenkiefer (12) für ein Kieferimplantat zum Stützen einer Zahnprothese, mit:
einem Kieferadapter (92), der aufweist:
ein an den Patientenkiefer (12) anpassbares Individualformteil (91), das individuell und derart an einen Patientenkiefer (12) anpassbar ist, dass sich der Kieferadapter (92) reproduzierbar auf den Patientenkiefer (12) formschlüssig aufsetzen lässt,
einen Kupplungsstecker (28'), wobei das Individuaiformteil (91) und der Kupplungsstecker (28') radiologisch nicht-sichtbar sind, und
eine Zugriffsöffnung (40,46) in Ausrichtung mit der zu bohrenden Implantatbohrung (51,52,53);
einer separaten Markerplatte (96), die aufweist:
einen radiologisch sichtbaren 3-D- Marker (36'), der die räumliche Beziehung zwischen dem Patientenkiefer (12) und dem Kieferadapter (92) herstellt, und
eine Kupplungsbuchse (30'), die mit dem Kupplungsstecker (28') zu einer Kupplungsanordnung räumlich eindeutig und definiert zusammenkuppelbar ist; und
einer separaten Bohrschablone (34') mit
einer Führungsbohrung (41,42,43) zum Bohren der Implantatbohrung (51,52,53) in den Patientenkiefer (12) und einer Kupplungsbuchse (30'), die mit dem Kupplungsstecker (28') zu einer Kupplungsanordnung räumlich eindeutig und definiert derart zusammenkuppelbar ist, dass die Bohrschablone (34') mit ihrem die Führungsbohrung (41,42,43) aufweisenden Bereich die Zugriffsöffnung (40) verschließt.

3. Implantierungshilfsanordnung (10) nach Anspruch 1 oder 2 wobei der Kleferadapter (22) eine standardisierte Kupplungsplatte (26) mit dem Kupplungsstecker (28) aufweist, die auf dem Individualformteil (24) befestigt ist, und die Bohrschablone (34) eine standardisierte Bohrschablonenplatte (35) mit der Kupplungsbuchse (30) ist, wobei die Führungsbohrung (41,42,43) durch eine Werkzeugmaschine mit Hilfe von Implantatbohrungs- Lageinformationen in die Bohrschablonenplatte (35) gebohrt wurde.

4. Implantlerungshilfsanordnung (10) nach Anspruch 3, wobei die Zugriffsöffnung (40) der standardisierten Kupplungsplatte (26) standardisiert ist. ;

5. Implantierungshilfsanordnung (10) nach Anspruch 4, wobei die Kupplungsplatte (26) eine Öffnung (80) oder mehrere Öffnungen mit mindestens zwei entfernbaren Zugriffsöffnungs-Deckeln (70-79) aufweist, wobei zum Freilegen der standardisierten Zugriffsöffnung (40) eine oder mehrere Zugriffsöffnungs-Deckel (70-79) entfernt werden können.

6. Implantierungshilfsanordnung (10) nach Anspruch 5, wobei die Öffnung (80) sich über den gesamten Kieferbogen erstreckt und die Zugriffsöffnungs-Deckel (70-79) seriell unmittelbar aneinander angrenzend angeordnet sind.

7. Implantierungshilfsanordnung (10) nach Anspruch 5 oder 6, wobei jeder Zugriffsöffnungs-Deckel (70-79) einen radiologisch sichtbaren Deckel-Marker (38) aufweist.

8. Implantierungshilfsanordnung (10) nach einem der vorangegangenen Ansprüche, mit einer separaten Prothesenplatte (60), die mindestens einen Prothesenzahn (61,62,63), der radiologisch sichtbar ist, und eine Kupplungsbuchse (30) aufweist, die mit dem Kupplungsstecker (28) zu einer Kupplungsanordnung räumlich eindeutig und definiert zusammenkuppelbar ist, wobei die Prothesenplatte (60) mit ihrem den Prothesenzahn (61,62,63) aufweisenden Bereich die Zugriffsöffnung (40) verschließt.

## Claims

1. Implantation aid assembly (10) for drilling an implant bore (51, 52, 53) into a patient's jaw (12) for a jaw implant intended for the support of a dental prosthesis, with:
a jaw adapter (22) which comprises
an individualized molded part (24) adaptable to a patient's jaw (12), which is individual and adaptable to a patient's jaw (12) such that the jaw adapter (22) can be set on a patient's jaw (12) in a reproducible and form-fitting manner,
a coupling pin (28), wherein the individualized molded part (24) and the coupling plug (28) are radiologically invisible, and
a radiologically visible 3D marker (36) which is permanently provided on the jaw adapter (22) and defines the spatial relationship between a patient's jaw (12) and the jaw adapter (22),
wherein the jaw adapter (22) has an access opening (40, 46) in alignment with the implant bore (51, 52, 53) to be drilled,
and a separate drilling jig (34) comprising
a guide bore (41, 42, 43) for drilling an implant bore (51, 52, 53) into a patient's jaw (12), and
a coupling socket (30) adapted to be coupled with the coupling pin (28) in a spatially distinct and defined manner to form a coupling arrangement, such that the drilling jig closes the access opening (40) with its portion having the guide bore (41, 42, 43).

2. Implantation aid assembly (10') for drilling an implant bore (51, 52, 53) into a patient's jaw (12) for a jaw implant intended for the support of a dental prosthesis, with:
a jaw adapter (92) which comprises
an individualized molded part (91) adaptable to a patient's jaw (12), which is individual and adaptable to a patient's jaw (12) such that the jaw adapter (92) can be set on a patient's jaw (12) in a reproducible and form-fitting manner,
a coupling pin (28'), wherein the individualized molded part (91) and the coupling plug (28') are radiologically invisible, and
an access opening (40, 46) in alignment with the implant bore (51, 52, 53) to be drilled;
a separate marker plate (96) comprising
a radiologically visible 3D marker (36') which defines the spatial relationship between a patient's jaw (12) and the jaw adapter (92),
a coupling socket (30') adapted to be coupled with the coupling pin (28') in a spatially distinct and defined manner to form a coupling arrangement, and
a separate drilling jig (34') comprising
a guide bore (41, 42, 43) for drilling the implant bore (51, 52, 53) into a patient's jaw (12), and
a coupling socket (30') adapted to be coupled with the coupling pin (28') in a spatially distinct and defined manner to form a coupling arrangement, such that the drilling jig (34') closes the access opening (40) with its portion having the guide bore (41, 42, 43).

3. Implantation aid assembly (10) of claim 1 or 2, wherein the jaw adapter (22) comprises a standardized coupling plate (26) having the coupling pin (28) which is fastened on the on the individualized molded part (24), and the drilling jig (34) is a standardized drilling jig plate (35) having the coupling socket (30), wherein the guide bore (41, 42, 43) has been drilled into the drilling jig plate (35) by means of a machine tool using positional information about the implant bore.

4. Implantation aid assembly (10) of claim 3, wherein the access opening (40) of the standardized coupling plate (26) is standardized.

5. Implantation aid assembly (10) of claim 4, wherein the coupling plate (26) comprises an opening (8it) or a plurality of openings with at least two removable access opening covers (70-79), wherein one or more access opening covers (70-79) can be removed to expose the standardized access opening (40).

6. Implantation aid opening (10) of claim 5, wherein the opening (80) extends over the entire maxillary arch and the access opening covers (70-79) are arranged in series, one immediately adjoining the other.

7. Implantation aid assembly (10) of claim 5 or 6, wherein each access opening cover (70-79) has a radiologically visible cover marker (38).

8. Implantation aid assembly (10) of one of the preceding claims, comprising a separate prosthesis plate (60) with at least one radiologically visible prosthetic tooth (61, 62, 63) and a coupling socket (30) adapted to be coupled with the coupling pin (28) in a spatially distinct and defined manner to form a coupling arrangement, wherein the prosthesis plate (60) closes the access opening (40) with its portion comprising the prosthetic tooth (61, 62, 63).

## Revendications

1. Ensemble d'aide à l'implantation (10) pour percer un perçage d'implant (51, 52, 53) dans la mâchoire d'un patient (12), perçage pour un implant maxillaire, pour supporter une prothèse dentaire, comportant:
un adaptateur de mâchoire (22) avec
une partie moulée individualisée (24) adaptable à la mâchoire d'un patient (12), la partie étant individuelle et adaptable à la mâchoire d'un patient (12) de façon que l'adaptateur de mâchoire (22) peut être placé sur la mâchoire d'un patient (12) d'une manière reproductible et positive, et
une broche d'accouplement (28), ladite partie moulée individualisée (24) et ladite broche d'accouplement (28) étant radiologiquement invisibles, et
un marqueur tridimensionnel (36) qui est prévu de manière permanente sur l'adaptateur de mâchoire (22) et établit la relation spatiale entre la mâchoire d'un patient (12) et l'adaptateur de mâchoire (22),
ledit adaptateur de mâchoire (22) comprenant une ouverture d'accès (40, 46) alignée sur le perçage d'implant (51, 52, 53) à percer,
et un gabarit de perçage (34; 88) séparé avec
un perçage de guidage (41, 42, 43) pour percer le perçage d'implant (51, 52, 53) dans la mâchoire d'un patient (12), et
une douille d'accouplement (30) apte à être accouplée avec la broche d'accouplement (28) d'une manière claire et définie au niveau spatiale, pour former un ensemble d'accouplement, de sorte que le gabarit de perçage ferme l'ouverture d'accès (40) par sa partie comprenant le perçage de guidage (41, 42, 43).

2. Ensemble d'aide à l'implantation (10') pour percer un perçage d'implant (51, 52, 53) dans la mâchoire d'un patient (12), perçage pour un implant maxillaire, pour supporter une prothèse dentaire, comportant:
un adaptateur de mâchoire (22) avec
une partie moulée individualisée (91) adaptable à la mâchoire d'un patient (12), la partie étant individuelle et adaptable à la mâchoire d'un patient (12) de façon que l'adaptateur de mâchoire (92) peut être placé sur la mâchoire d'un patient (12) d'une manière reproductible et positive, et
une broche d'accouplement (28'), ladite partie moulée individualisée (91) et ladite broche d'accouplement (28') étant radiologiquement invisibles, et
une ouverture d'accès (40, 46) alignée sur le perçage d'implant (51, 52, 53) à percer,
une plaque de marquage (96) séparée, comportant
un marqueur tridimensionnel (36') qui établit la relation spatiale entre la mâchoire d'un patient (12) et l'adaptateur de mâchoire (92), et
une douille d'accouplement (30') apte à être accouplée avec la broche d'accouplement (28') d'une manière claire et définie au niveau spatiale, pour former un ensemble d'accouplement, et
un gabarit de perçage (34') séparé, avec
un perçage de guidage (41, 42, 43) pour percer le perçage d'implant (51, 52, 53) dans la mâchoire d'un patient (12), et
une douille d'accouplement (30') apte à être accouplée avec la broche d'accouplement (28') d'une manière claire et définie au niveau spatiale, pour former un ensemble d'accouplement, de sorte que le gabarit de perçage (34') ferme l'ouverture d'accès (40) par sa partie comprenant le perçage de guidage (41, 42, 43),

3. Ensemble d'aide à l'implantation (10) selon la revendication 1 ou 2, dans lequel l'adaptateur de mâchoire (22) comprend une plaque d'accouplement (26) standardisée comportant la broche d'accouplement (28), la plaque étant fixée sur la partie moulée individualisée (91), et le gabarit de perçage (34) comprend une plaque de gabarit de perçage (35) standardisée comportant la douille d'accouplement (30), le perçage de guidage (41, 42, 43) étant percé dans la plaque de gabarit de perçage (35) à l'aide d'une machine outil utilisant des informations positionnelles sur le perçage d'implant.

4. Ensemble d'aide à l'implantation (10) selon la revendication 3, dans lequel l'ouverture d'accès (40) de la plaque d'accouplement (26) standardisée est standardisée.

5. Ensemble d'aide à l'implantation (10) selon la revendication 4, dans lequel la plaque d'accouplement (26) comprend une ouverture (80) ou plusieurs ouvertures avec au moins deux couvercles d'ouverture d'accès (70-79) amovibles, il étant possible d'enlever un ou plusieurs couvercles d'ouverture d'accès (70-79) pour exposer l'ouverture d'accès standardisée (40).

6. Ensemble d'aide à l'implantation (10) selon la revendication 5, dans lequel ladite ouverture (80) s'étend sur tout l'arc maxillaire et les couvercles d'ouverture d'accès (70-79) sont rangées en série de manière directement contiguë l'une à l'autre.

7. Ensemble d'aide à l'implantation (10) selon la revendication 5 ou 6, dans lequel chaque couvercle d'ouverture d'accès (70-79) comprend un marqueur de couvercle (38) radiologiquement visible,

8. Ensemble d'aide à l'implantation (10) selon l'une quelconque des revendications précédentes, avec une plaque de prothèse (60) séparée qui comporte au moins une dent prosthétique (61, 62, 63) radiologiquement visible et douille d'accouplement (30) apte à être accouplée avec la broche d'accouplement (28) d'une manière claire et définie au niveau spatiale, pour former un ensemble d'accouplement, de sorte que la plaque de prothèse (60) ferme l'ouverture d'accès (40) par sa partie comprenant la dent prosthétique (61, 62, 63).
